# EUROPEAN PATENT APPLICATION

(11) **EP 3 015 521 A1**
(43) Date of publication of application: **04.05.2016**
(21) Application number: 14190782.4
(22) Date of filing: 29.10.2014
(51) Int. Cl.: C09J 123/22, C09J 123/26

(54) **Hot melt adhesives with butyl ionomer**

(71) Applicant: Lanxess Inc., Sarnia, Ontario N7T 7M2 (CA)
(72) Inventor: Adkinson, Dana K., London, Ontario N6K 4C1 (CA)
(74) Representative: Deblon, Jörg-Stephan

(57) **Abstract**

An adhesive composition that contains a tackifier, a butyl rubber ionomer and a plasticizer. The hot melt adhesive compositions may exhibit one or more of improved creep resistance and improved adhesion.

## Description

### Field

This application relates to adhesives, particularly to hot melt adhesives containing a butyl rubber ionomer.

### Background

Poly(isobutylene-co-isoprene) or IIR, is a synthetic elastomer commonly known as butyl rubber (or Butyl polymer) which has been prepared since the 1940's through the random cationic copolymerization of isobutylene with small amounts of isoprene (usually not more than 2.5 mol %). As a result of its molecular structure, IIR possesses superior air impermeability, a high loss modulus, chemical and oxidative stability and extended fatigue resistance.

Halogenation of butyl rubber produces reactive allylic halide functionality within the elastomer. Conventional butyl rubber halogenation processes are described in, for example, Ullmann's Encyclopedia of Industrial Chemistry (Fifth, Completely Revised Edition, Volume A231 Editors Elvers, et al.) and/or "Rubber Technology" (Third Edition) by Maurice Morton, Chapter 10 (Van Nostrand Reinhold Company © 1987), particularly pp. 297-300.

The development of halogenated butyl rubber (halobutyl) has greatly extended the usefulness of butyl rubber by providing much higher curing rates and enabling co-vulcanization with highly unsaturated general purpose rubbers such as natural rubber and styrene-butadiene rubber (SBR). Butyl rubber and halobutyl rubber are high value polymers, as their unique combination of properties (excellent impermeability, good fatigue resistance , broad damping characteristics, good weatherability, heat resistance, chemical resistance, biocompatibility, and co-vulcanization with high unsaturation rubbers in the case of halobutyl) make them preferred materials for various applications, most significantly in making tire inner tubes and tire inner liners.

The presence of allylic halide functionalities allows for nucleophilic alkylation reactions. It has been shown that treatment of brominated butyl rubber (BIIR) with nitrogen and/or phosphorus based nucleophiles, in the solid state, leads to the generation of IIR-based ionomers with interesting physical and chemical properties (see: Parent, J. S.; Liskova, A.; Whitney, R. A; Resendes, R. Journal of Polymer Science, Part A: Polymer Chemistry 43, 5671-5679, 2005; Parent, J . S.; Liskova, A.; Resendes, R. Polymer 45, 8091-8096, 2004 ; Parent, J. S. ; Penciu, A. ; Guillen- Castellanos, S . A.; Liskova, A.; Whitney, R. A. Macromolecules 37, 7477-7483, 2004). The ionomer functionality is generated from the reaction of a nitrogen or phosphorus based nucleophile and the allylic halide sites in the halogenated butyl rubber to produce an ammonium or phosphonium ionic group respectively. In addition to benefits derived from the butyl rubber, butyl rubber ionomers are also more easily formed into pellets and have enhanced green strength.

Adhesives are characterized by exhibiting an overall balance of adhesive and cohesive bonding and exceptional adhesion to low surface-energy substrates. Adhesives can be classified in a variety of ways.

Pressure-sensitive tapes are widely used in domestic and industrial applications. In the simplest form, a pressure-sensitive tape comprises an adhesive and a backing and the overall construction is tacky at the use temperature and adheres to a variety of substrates using only moderate pressure to form the bond. In this fashion, pressure-sensitive tapes constitute a complete self-contained bonding system. Pressure sensitive adhesives are known to possess properties including 1) aggressive and permanent tack 2) adherence with no more than finger pressure, 3) sufficient ability to hold onto and an adhered article.

Materials that have been found to function well as PSAs include polymers designed and formulated to exhibit a set of requisite viscoelastic properties resulting in a desired balance of tack, peel adhesion and shear holding power. PSAs are characterized by being normally tacky at room temperature.. PSAs do not embrace compositions merely because they are sticky or adhere to a surface. The PSA requirements are assessed generally by means of tests which are designed to individually measure tack, adhesion (peel strength), and cohesion (shear holding power) as described by A. H. Landrock in Adhesives Technology Handbook, Noyes Publications, Park Ridge New Jersey, 1985. There are a wide variety of pressure sensitive adhesive (PSA) materials available today that include natural or synthetic rubbers, block copolymers and acrylic ester based polymeric compositions. Important to all PSAs is a desired balance of adhesion and cohesion that is often achieved by optimizing the physical properties of the elastomer, such as the glass transition temperature and modulus. Often low molecular weight, high Tg resins (tackifiers) or low molecular weight low Tg polymers (plasticizers) are often used to modulate or tune the Tg and modulus of the polymeric composition into an optimal PSA. For example, if the Tg or modulus of the elastomer is too high, then it will not have good tack and therefore would not be useful as a PSA material. The ability to tune the modulus of a polymeric substance is an important trait when designing various PSA type materials.

The butyl ionomer as described here may be optionally combined with a tackifier and a non-functionalized poly(isobutylene) polymer or other natural or synthetic polymer. The compositions may be useful in adhesives and coatings. The butyl ionomer may provide a further degree of freedom to material developers to provide the desired balance of tack, peel adhesion, and shear holding power for adhesive applications.

Hot melt adhesive (HMA) compositions are substantially solvent-free and have are versatile and widely used in a variety of domestic and industrial applications. Hot melt adhesive (HMA), also known as hot glue, is a form of thermoplastic adhesive that is commonly supplied in solid form and is designed to be melted for application to surfaces to be bonded. Hot melt adhesives are applied to a surface in the molten state and cooling of the adhesive bonds together the desired surfaces. Hot melt adhesives are useful in a variety of applications including book binding, closing corrugated fiberboard boxes and paperboard cartons, binding plastic parts and wooden articles, home crafts, assembly of parts in manufacturing, assembly and repair of foam model aircraft and toys, disposable diaper construction where it is used to bond the nonwoven material with the back sheet and the elastics, affixing parts or wires in electronic devices, and coating label stock material used for self-adhesive labels, window and automotive sealants, among others. They are generally 100% solid adhesives with application temperatures which vary from about 150 °C to 180 °C. Polyisobutylene (PIB) and butyl based materials have been considered as an attractive material for low surface energy bonding applications due to its excellent adhering properties on olefin based thermoplastics. In addition, the excellent moisture and oxygen barrier properties of PIB suggest that PIB-based materials have potential use in electronic and photovoltaic encapsulation applications. In spite of these beneficial properties, low cohesive strength of the materials has limited their use in high shear applications. Another possible application for such materials has been in the medical adhesive field due to the high purity compared to acrylate based PSA. PIB and butyl based materials are used because they are physiologically inert, but again tend to be deficient in internal strength.

Thus it is clear that there remains a need for improving one or more of the properties of adhesive formulations be it pressure sensitive adhesives or hot melt adhesives.

### Summary

There is provided a hot melt adhesive composition comprising a tackifier, a butyl rubber ionomer and a plasticizer.

According to one aspect of the present invention, the hot melt adhesive composition further comprises a secondary polymer.

According to another aspect of the present invention, the secondary polymer is a non-ionomeric butyl rubber.

According to a preferred embodiment, the butyl rubber ionomer and the non-ionomeric butyl rubber are present in substantially equal amounts.

There is further provided a use of the hot melt adhesive composition for bonding surfaces together.

The hot melt adhesive compositions may exhibit one or more of improved creep resistance and improved adhesion.

The hot melt adhesive compositions may be adhered to a variety of substrates, with improved bonding strength (holding characteristics). The adhesive compositions are easily handled and are environmentally friendly due to the low volatile organic compound (VOC) content, such as solvents.

The adhesive compositions of the present disclosure further provide a basis for a pressure sensitive adhesive article such as used for tapes or sealants.

Further features will be described or will become apparent in the course of the following detailed description. It should be understood that each feature described herein may be utilized in any combination with any one or more of the other described features, and that each feature does not necessarily rely on the presence of another feature except where evident to one of skill in the art.

### Brief Description of the Drawings

For clearer understanding, preferred embodiments will now be described in detail by way of example, with reference to the accompanying drawings, in which:
Fig. 1 depicts a graph of shear compliance (J, Pa⁻¹) vs. time (s) in a creep test for a hot melt adhesive composition of the present invention (Ex 4) compared to a control composition (Ex 1).
Fig. 2 depicts a graph showing peak force (N) required to achieve bond failure for two glass substrates and two steel substrates bonded together with hot melt adhesive composition of the present invention (Ex 4) or a control composition (Ex 1).

### Detailed Description

The adhesive composition comprises a tackifier, a butyl rubber ionomer and a plasticizer. The components of the hot melt adhesive composition may be present in the hot melt adhesive composition in any suitable amount.

The tackifier is preferably present in an amount of about 5 wt% to about 50 wt%, or about 5 wt% to about 40 wt%, or about 10 wt% to about 30 wt%, or about 10 wt% to about 25 wt%. The butyl rubber ionomer is preferably present in an amount of about 0.5 wt% to about 60 wt%, or about 0.5 wt% to about 50 wt%, or about 1 wt% to about 25 wt% of the adhesive. The plasticizer is preferably present in an amount of about 5 wt% to about 80 wt%, or about 20 wt% to about 75 wt%, or about 30 wt% to about 65 wt%. In another embodiment, the butyl rubber ionomer may be added as blend with a secondary polymer in the adhesive composition.

All weight percentages are based on total weight of the hot melt adhesive composition. It is understood by one skilled in the art that the total amount of all components in the hot melt adhesive composition does not exceed 100 wt%. When selecting amounts of each component to use within the ranges provided, one skilled in the art will understand that increasing the amount of one or more of the components would result in decreasing the amount one or more of the other components and that amounts of one component would not be selected to exclude the presence of another component if both components are desired in the composition.

The creep value of the hot melt adhesive composition, as measured by an Anton Paar MCR at 25 °C with 150 Pa stress using the MCR 25 mm plate, may be less than the creep value of similar HMAs without the butyl rubber ionomer and the shear compliance (J) may be may be at least 1.1 times greater, or at least 1.15 times greater, or at least 1.25 times greater after 7000 sec. Adhesion of the adhesive composition to a substrate, as measured by ASTM D3163, may be at least 1.1 times greater, or at least 1.25 times greater, or at least 1.5 times greater, or at least 1.75 times greater than adhesion of similar HMAs without the butyl rubber ionomer to the same substrate.

### Tackifier

Tackifiers tend to have low molecular weight, and glass transition and softening temperature above room temperature, providing them with suitable viscoelastic properties. The tackifier may comprise a resin, preferably a polymeric resin. More preferably, a polymeric resin comprising an aliphatic resin, cycloaliphatic resin, an aromatic resin, or combination thereof. For example, suitable polymeric resins include aliphatic and cyclo-aliphatic petroleum hydrocarbon resins, hydrogenated aliphatic and cyclo-aliphatic petroleum hydrocarbon resins, hydrogenated aromatic petroleum hydrocarbon resins, aliphatic/aromatic petroleum derived - hydrocarbon resins, hydrogenated aliphatic/aromatic derived hydrocarbon resins, aromatic modified cyclo-aliphatic resins, hydrogenated aromatic modified cyclo-aliphatic resins, polyterpene resins, copolymers and terpolymers of natural terpenes, and mixtures thereof.

More preferably the polymeric resin comprises rosins, rosin derivatives, terpenes, modified terpenes, hydrocarbon resins, hydrogenated hydrocarbon resins, terpene-phenol resins or mixtures thereof.

Preferred tackifiers are polyisobutylene (PIB), hydrocarbon resins (e.g. C5 aliphatic resins, dicyclopentadiene (DCPD) resin, C9 aromatic resins, C5/C9 aliphatic/aromatic resins) or mixtures thereof. Some tackifiers may serve more than one purpose in the composition.

### Butyl Rubber lonomers

The butyl rubber ionomer may be prepared from a halogenated butyl rubber polymer. The halogenated butyl rubber polymer may be prepared from a butyl rubber polymer. The butyl rubber polymer may be a copolymer derived from at least one isoolefin monomer and at least one multiolefin monomer and/or β-pinene, and optionally one or more further copolymerizable monomers.

Suitable isoolefin monomers include hydrocarbon monomers having 4 to 16 carbon atoms. In one embodiment, isoolefins have from 4-7 carbon atoms. Examples of suitable isoolefins include isobutene (isobutylene), 2-methyl-1-butene, 3-methyl-1-butene, 2-methyl-2-butene, 4-methyl-1-pentene, 4-methyl-1-pentene and mixtures thereof. A preferred isoolefin monomer is isobutene (isobutylene).

Multiolefin monomers copolymerizable with the isoolefin monomers may include dienes, for example conjugated dienes. Particular examples of multiolefin monomers include those having in the range of from 4-14 carbon atoms. Examples of suitable multiolefin monomers include isoprene, butadiene, 2-methylbutadiene, 2,4-dimethylbutadiene, piperyline, 3-methyl-1,3-pentadiene, 2,4-hexadiene, 2-neopentylbutadiene, 2-methyl-1,5-hexadiene, 2,5-dimethyl-2,4-hexadiene, 2-methyl-1,4-pentadiene, 4-butyl-1,3-pentadiene, 2,3-dimethyl-1,3-pentadiene, 2,3-dibutyl-1,3-pentadiene, 2-ethyl-1,3-pentadiene, 2-ethyl-1,3-butadiene, 2-methyl-1,6-heptadiene, cyclopentadiene, methylcyclopentadiene, cyclohexadiene, 1-vinyl-cyclohexadiene and mixtures thereof. A particularly preferred conjugated diene is isoprene. β-pinene may also be used instead of or in addition to the multiolefin monomer. Herein multiolefin/β-pinene monomers refer to the presence or use of one or more multiolefin monomers and/or β-pinene monomer.

The butyl rubber polymer may optionally include one or more additional copolymerizable monomers along with the isoolefin and multiolefin/β-pinene monomers. Additional copolymerizable monomers include monomers copolymerizable with the isoolefin and/or multiolefin/β-pinene monomers. Suitable copolymerizable monomers include, for example, styrenic monomers, such as alkyl-substituted vinyl aromatic comonomers, including but not limited to a C₁-C₄ alkyl substituted styrene. Specific examples of copolymerizable monomers include, for example, α-methyl styrene, p-methyl styrene, chlorostyrene, cyclopentadiene and methylcyclopentadiene. In one embodiment, the butyl rubber polymer may comprise random copolymers of isobutylene, isoprene and p-methyl stryene.

The butyl rubber polymers are formed from a mixture of monomers described herein. In one embodiment, the monomer mixture comprises from about 80% to about 99% by weight of an isoolefin monomer and from about 1% to 20% by weight of a multiolefin/β-pinene monomer. In another embodiment, the monomer mixture comprises from about 85% to about 99% by weight of an isoolefin monomer and from about 1% to 15% by weight of a multiolefin/β-pinene monomer. In certain embodiments, three monomers may be employed. In these embodiments, the monomer mixture may comprise about 80% to about 99% by weight of isoolefin monomer, from about 0.5% to about 5% by weight of a multiolefin/β-pinene monomer, and from about 0.5% to about 15% by weight a third monomer copolymerizable with the isoolefin and/or multiolefin/β-pinene monomers. In one embodiment, the monomer mixture comprises from about 68% to about 99% by weight of an isoolefin monomer, from about 0.5% to about 7% by weight of a multiolefin/β-pinene monomer and from about 0.5% to about 25% by weight of a third monomer copolymerizable with the isoolefin and/or multiolefin/β-pinene monomers.

The butyl rubber polymer may be prepared by any suitable method, of which several are known in the art. For example, the polymerization of monomers may be performed in the presence of AlCl₃ and a proton source and/or cationogen capable of initiating the polymerization process. A proton source includes any compound that will produce a proton when added to AlCl₃ or a composition containing AlCl₃. Protons may be generated from the reaction of AlCl₃ with proton sources such as water, alcohol or phenol to produce the proton and the corresponding by-product. Such reaction may be preferred in the event that the reaction of the proton source is faster with the protonated additive as compared with its reaction with the monomers. Other proton generating reactants include thiols, carboxylic acids, and the like. The most preferred proton source is water. The preferred ratio of AlCl₃ to water is between 5:1 to 100:1 by weight. It may be advantageous to further introduce AlCl₃ derivable catalyst systems, diethylaluminium chloride, ethylaluminium chloride, titanium tetrachloride, stannous tetrachloride, boron trifluoride, boron trichloride, or methylalumoxane. Inert solvents or diluents known to the person skilled in the art for butyl polymerization may be considered as the solvents or diluents (reaction medium). These include alkanes, chloroalkanes, cycloalkanes or aromatics, which are frequently also mono- or polysubstituted with halogens. Hexane/chloroalkane mixtures, methyl chloride, dichloromethane or the mixtures thereof may be preferred. Chloroalkanes are preferably used. The monomers are generally polymerized cationically, preferably at temperatures in the range from -120°C to +20°C, preferably in the range from -100°C to -20°C, and pressures in the range from 0.1 to 4 bar.

The butyl polymer may also be produced via a solution process as outlined in WO2011089083 A1 and references therein. A C6 solvent is a particularly preferred choice for use in a solution process. C6 solvents suitable for use in the present invention preferably have a boiling point of between 50°C and 69°C. Examples of preferred C6 solvents include n-hexane or hexane isomers, such as 2-methyl pentane or 3-methyl pentane, or mixtures of n-hexane and such isomers as well as cyclohexane.

The butyl rubber polymer may comprise at least 0.5 mol% repeating units derived from the multiolefin/β-pinene monomers. In some embodiments, the repeating units derived from the multiolefin/β-pinene monomers may be present in the butyl rubber polymer in an amount of at least 0.75 mol%, or at least 1.0 mol%, or at least 1.5 mol%, or at least 2.0 mol%, or at least 2.5 mol%, or at least 3.0 mol%, or at least 3.5 mol%, or at least 4.0 mol%, or at least 5.0 mol%, or at least 6.0 mol%, or at least 7.0 mol%. In one embodiment, the butyl rubber polymer may comprise from 0.5 to 2.2 mol% of the multiolefin/β-pinene monomers. In another embodiment, the butyl rubber polymer may comprise higher multiolefin/β-pinene monomer content, e.g. 3.0 mol% or greater. The preparation of suitable high multiolefin/β-pinene butyl rubber polymers is described in Canadian Patent Application 2,418,884, which is incorporated herein by reference.

In one embodiment, the halogenated butyl rubber polymer may be obtained by first preparing a butyl rubber polymer from a monomer mixture comprising one or more isoolefins, and one or more multiolefins and/or β-pinene, followed by subjecting the resulting copolymer to a halogenation process to form the halogenated butyl rubber polymer. Halogenation can be performed according to the process known by those skilled in the art, for example, the procedures described in Rubber Technology, 3rd Ed., Edited by Maurice Morton, Kluwer Academic Publishers, pp. 297-300 and further documents cited therein. Halogenation may involve bromination and/or chlorination. Brominated butyl rubber polymers may be of particular note. For example, a brominated butyl rubber comprising isobutylene and less than 2.2 mole percent isoprene is commercially available from LANXESS Deutschland GmbH and sold under the name BB2030™.

In the halogenated butyl rubber polymers one or more of the repeating units derived from the multiolefin monomers comprise an allylic halogen moiety. During halogenation, some or all of the multiolefin and/or β-pinene content of the copolymer is converted to units comprising allylic halides. These allylic halide sites in the halobutyl rubber polymer result in repeating units derived from the multiolefin monomers and/or β-pinene originally present in the butyl rubber polymer. The total allylic halide content of the halogenated butyl rubber polymer cannot exceed the starting multiolefin and/or β-pinene content of the parent butyl rubber polymer, however residual allylic halides and/or residual multiolefins may be present. The allylic halide sites allow for reacting with and attaching one or more nucleophiles to the halobutyl rubber polymer. The halogenated butyl rubber polymer may have a total allylic halide content from 0.05 to 2.0 mol%. The halogenated butyl rubber polymer may also contain residual multiolefin levels ranging from 2 to 10 mol %.

The butyl rubber ionomers may be obtained by reacting a halogenated butyl rubber polymer with a nucleophile having no pendant vinyl group, a nucleophile comprising a pendant vinyl group or a mixture thereof. The halogenated rubber polymer may be reacted first with a nucleophile having no pendant vinyl group and then with a nucleophile having a pendant vinyl group.

Nucleophiles suitable for the preparation of the butyl rubber ionomers may contain at least one neutral phosphorus or nitrogen center, which possess a lone pair of electrons, the lone pair being both electronically and sterically accessible for participation in nucleophilic substitution reactions. The butyl rubber ionomers obtained from such nucleophiles would comprise phosphorus-based or nitrogen-based ionic moieties.

In one embodiment, the allylic halide sites of the halogenated butyl rubber polymers are reacted with nucleophiles (with or without a pendant vinyl group) having of formula (I): 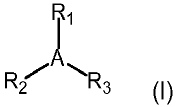 wherein,
A is a nitrogen or phosphorus; and,
R₁, R₂ and R₃ are independently: a vinyl group, a linear or branched C₁-C₁₈ alkyl group; a linear or branched C₁-C₁₈ alkyl group comprising one or more hetero atoms selected from the group consisting of O, N, S, B, Si and P; C₆-C₁₀ aryl group; C₃-C₆ heteroaryl group; C₃-C₆ cycloalkyl group; C₃-C₆ heterocycloalkyl group; or combinations thereof. If the nucleophile has a pendant vinyl group, the vinyl group may be one of R₁, R₂ or R₃ or could be pendant from one or more of the R₁, R₂ or R₃ groups. Two or all three of the R₁, R₂ and R₃ moieties may be fused together.

Suitable nucleophiles include, but are not limited to trimethylamine, triethylamine, triisopropylamine, tri-n-butylamine, trimethylphosphine, triethylphosphine, triisopropylphosphine, tri-n-butylphosphine, triphenylphosphine, diphenylphosphinostyrene, allyldiphenylphosphine, diallylphenylphosphine, diphenylvinylphosphine, triallylphosphine, 2-dimethylaminoethanol, 1-dimethylamino-2-propanol, 2-(isopropylamino)ethanol, 3-dimethylamino-1-propanol, N-methyldiethanolamine, 2-(diethylamino)ethanol, 2-dimethylamino-2-methyl-1-propanol, 2-[2-(dimethylamino)ethoxy]ethanol, 4-(dimethylamino)-1-butanol, N-ethyldiethanolamine, triethanolamine, 3-diethylamino-1-propanol, 3-(diethylamino)-1,2-propanediol, 2-{[2-(dimethylamino)ethyl]methylamino}ethanol, 4-diethylamino-2-butyn-1-ol, 2-(diisopropylamino)ethanol, N-butyldiethanolamine, N-tert-butyldiethanolamine, 2-(methylphenylamino)ethanol, 3-(dimethylamino)benzyl alcohol, 2-[4-(dimethylamino)phenyl]ethanol, 2-(N-ethylanilino)ethanol, N-benzyl-N-methylethanolamine, N-phenyldiethanolamine, 2-(dibutylamino)ethanol, 2-(N-ethyl-N-m-toluidino)ethanol, 2,2'-(4-methylphenylimino)-diethanol, tris[2-(2-methoxyethoxy)ethyl]amine, 3-(dibenzylamino)-1-propanol, N-vinyl caprolactam, N-vinyl phthalimide, 9-vinyl carbazole, N-[3-(dimethylamino)propyl]methacrylamide or mixtures thereof.

The reaction between the nucleophile and the halogenated butyl rubber polymer may be carried out at a temperature in a range of from about 60°C to about 250°C. In one embodiment, the reaction between the nucleophile and the halogenated butyl rubber polymer may be carried out at a temperature about 80°C to about 200°C. In another embodiment, the reaction between the nucleophile and the halogenated butyl rubber polymer may be carried out at a temperature about 100°C to about 160°C. The reaction may be carried out for a time in a range of from about 0.5 to 90 minutes, preferably from 1 to 60 minutes, more preferably from 5 to 30 minutes. The amount of nucleophile reacted with the halogenated butyl rubber polymer may be in the range of from 0.01 to 5 molar equivalents, more preferably about 0.1 to 2 molar equivalents, even more preferably about 0.5 to 1 molar equivalents, based on the total molar amount of allylic halide present in the halogenated butyl rubber polymer. The resulting butyl rubber ionomer preferably possesses from about 0.01 to 10 mol%, more preferably from about 0.1 to 5.0 mol%, even more preferably from about 0.5 to 0.8 mol% of ionomeric moieties. The resulting butyl rubber ionomer may be a mixture of the polymer-bound ionomeric moiety and allylic halide such that the total molar amount of ionomeric moiety and allylic halide functionality are present in an amount not exceeding the original allylic halide content.

### Secondary polymer

The hot melt adhesive compositions may further comprise a secondary polymer. Any suitable hot melt polymer may be used, for example ethylene-vinyl acetate (EVA) copolymers, ethylene acrylate, polyolefins (PO) including polyethylene,polypropylene, polybutene, amorphous polyolefins (APO) such as amorphous (atactic) propylene (APP), amorphous propylene/ethylene (APE), amorphous propylene/butene (APB), amorphous propylene/hexene (APH), amorphous propylene/ethylene/butene, polyamides (PA), polyesters, thermoplastic polyurethane (TPU), polyurethanes (PUR), styrene block copolymers (SBC), styrene-butadiene (SB), styrene-butadiene-styrene (SBS), styrene-isoprene- slyrene (SIS), styrene-isoprene (SI), styrene-isoprene-buladiene-siyrene (SIBS), slyrene-ethylene-butylene-styrene (SEBS), styrene-ethylene-butylene (SEB), styrene-ethylene-propylene-styrene (SEPS), styrene-ethylene-propylene (SEP) and styrene-ethylene-ethylene-propylene-styrene (SEEPS), polycarbonates, fluoropolymers, polycaprolactone, silicone rubbers, thermoplastic elastomers, polypyrrole (PPY), butyl rubbers (IIR), natural rubbers (NR), or any mixture thereof. Butyl rubber and styrenic block copolymers are particularly preferred. In one particularly preferred embodiment, the hot melt adhesive composition does not comprise bitumen.

### Plasticizer

As used herein, the plasticizer is an organic composition that is added to rubbers and resins to improve extrudability, flexibility, workability, or stretchability. Typical plasticizers in adhesives are plasticizing oils that are liquid at ambient temperature, such as paraffinic and naphthenic petroleum oils, highly refined aromatic-free paraffinic and naphthenic food and technical grade white petroleum mineral oils, and liquid tackifiers such as the synthetic liquid oligomers of polybutene, polyisobutylene, polypropylene, polyterpene, etc. A preferred plasticizer is polyisobutylene.

### Additives

Hot melt adhesive compositions may comprise one or more additives. Additives may perform a specific purpose or a single additive may be multipurpose.

A preferred additive is a filler. The filler may be, for example, in the form of metal carbonates, metal oxides, metal hydroxides, metal silicates, etc., or a mixture thereof. Some exemplary compounds include, for example, aluminum oxide, aluminum hydroxide, magnesium carbonate, magnesium oxide, magnesium hydroxide, calcium carbonate, calcium oxide, calcium hydroxide, carbon black, talc, nanoclay, and mixtures thereof. Calcium carbonate is particularly preferred. The filler may be present in the hot melt adhesive composition in any suitable amount. Of particular note is an amount of about 5 wt% to about 80 wt%, or about 10 wt% to about 50 wt%, or about 15 wt% to about 30 wt%, based on total weight of the hot melt adhesive composition.

Hot melt adhesives may further comprise one or more other additives, for example a, an antioxidant, a plasticizer, a pigment, a wax, a diluent, a stabilizer, a flame retardant, a microbicide, a toughener, an impact modifier, a lubricant, etc. Any suitable amount of another additive may be used. For example, up to about 15 wt% based on total weight of the hot melt adhesive composition may be used.

### Compounding and Application

Ingredients may be compounded together using conventional compounding techniques. Suitable compounding techniques include, for example, mixing the ingredients together using, an internal mixer (e.g. a Banbury mixer), a miniature internal mixer (e.g. a Haake or Brabender mixer) or a two roll mill mixer. An extruder also provides good mixing, and permits shorter mixing times. Internal mixers are preferred. It is possible to carry out the mixing in two or more stages, and the mixing can be done in different apparatuses, for example one stage in an internal mixer and one stage in an extruder. For further information on compounding techniques, see Encyclopedia of Polymer Science and Engineering, Vol. 4, p. 66 et seq. (Compounding). Other techniques, as known to those of skill in the art, are further suitable for compounding. Other additives known to those of skill in the art may also be added to the blend in the usual way and in the normal amounts. Additionally, other additives may be added to the ionomer prior to blending with the tackifier.

In an embodiment, the ingredients are compounded at a temperature of 300°C or lower. Compounding is preferably performed at a temperature above the melting temperature of the tackifier.

The adhesive mixture may be applied to surfaces to be bonded in any suitable manner, for example with a glue gun, a spreading knife and the like. Hot melt adhesives are applied to a surface in the molten state and cooling of the adhesive bonds together the desired surfaces. Surfaces that may be bonded together include, for example, glass, metal (e.g. steel), aluminum, steel, painted surfaces, paper, cardboard, cloth, fibers and plastics, among others. Two surfaces being bonded together may be of the same or different material. Hot melt adhesives are useful in a variety of applications including book binding, closing corrugated fiberboard boxes and paperboard cartons, binding plastic parts and wooden articles, home crafts, assembly of parts in manufacturing, assembly and repair of foam model aircraft and toys, disposable diaper construction where it is used to bond the nonwoven material with the back sheet and the elastics, affixing parts or wires in electronic devices, and coating label stock material used for self-adhesive labels, window, construction and automotive sealants, among others. They are generally 100% solid adhesives with application temperatures which vary from about 150°C to 180°C.

### Examples:

### Materials and Methods

Butyl rubber ionomer is X Butyl™ I4565P available from Lanxess Corporation. Butyl rubber RB301 is available from Lanxess Corporation. Hydrocarbon resin tackifier is Eastotac™ H-130 is available from Eastman Chemicals. Polyisobutylene (PIB) is TPC1105 is available from TPC Group. Calcium carbonate (CaCO₃) is VitaCal® PCC from Debro Chemicals Inc. Antioxidant is Irganox® 1010 from CIBA Specialty Chemicals Inc. Creep is determined using an Anton Paar MCR at 25 °C, with 150 Pa stress using the MCR 25 mm plates. Adhesion is determined using lap shear adhesion with reference to ASTM D 3163 with a specimen size of 4" substrate with a 1" overlap and pull rate of 0.05 in/min or 1.3 mm/min. Ingredients were combined in an internal mixer (Brabender, capacity 75 g) using sigma blades at a mixing speed of 60 rpm and a temperature of 177°C

### Examples 1-5

Five adhesive compositions were formulated according to the compositions as shown in Table 1 using the procedure as described above. Amounts in Table 1 are provided in wt% based on total weight of the composition. Example 1 is a control composition. Example 2 replaces 10% of the base polymer (RB301) with butyl ionomer (X Butyl™ I4565P). Example 3 replaces 25% of the base polymer (RB301) with butyl ionomer (X Butyl™ I4565P). Example 4 replaces 50% of the base polymer (RB301) with butyl ionomer (X Butyl™ I4565P). Example 5 replaces the base polymer (RB301) with butyl ionomer (X Butyl™ I4565P).

**Table 1**

| Ingredient | Ex 1 | Ex 2 | Ex 3 | Ex 4 | Ex 5 |
|---|---|---|---|---|---|
| LANXESS Butyl RB301 (wt%) | 25 | 22.5 | 18.75 | 12.5 | --- |
| X Butyl™ I4565P (wt%) | --- | 2.5 | 6.25 | 12.5 | 25 |
| Eastotac™ H-130 | 30 | 30 | 30 | 30 | 30 |
| CaCO₃ (wt%) | 20.5 | 20.5 | 20.5 | 20.5 | 20.5 |
| Antioxidant (wt%) | 0.5 | 0.5 | 0.5 | 0.5 | 0.5 |
| PIB (wt%) | 24 | 24 | 24 | 24 | 24 |
| Total (wt%) | 100 | 100 | 100 | 100 | 100 |
| Adhesion to Steel (N) | 23 | 28 | 38 | 42 | 101 |
| Adhesion to Aluminum (N) | 27 | | | 35 | |
| Adhesion to PVC (N) | 28 | | | 33 | |
| Adhesion to Glass (N) | 24 | | | 45 | |

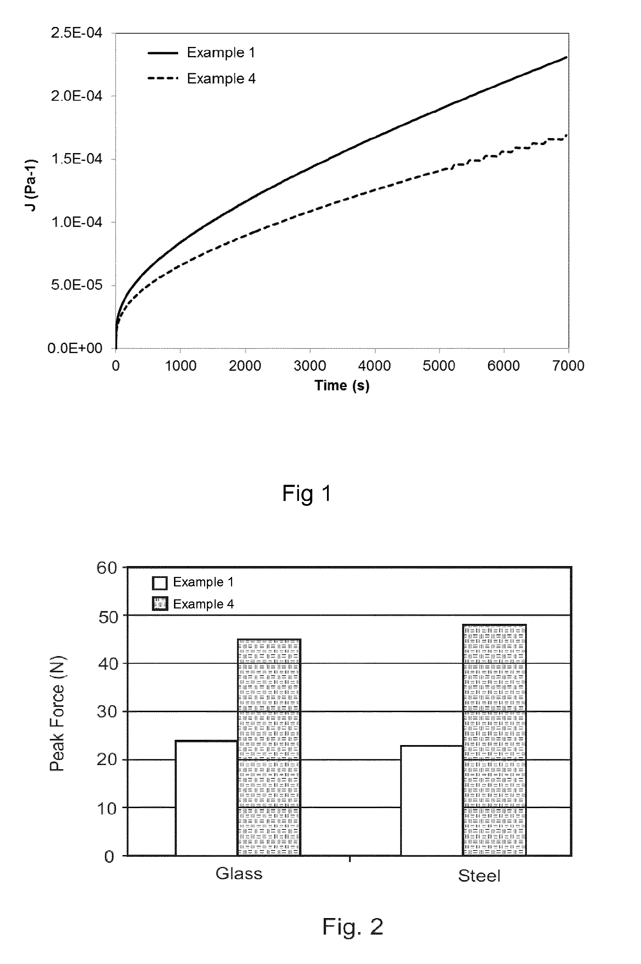

For Examples 1 and 4, the results of creep are depicted in Fig. 1. The ionomer based hot melt adhesives (Ex. 4) shows significantly less creep correlating to lower slump than the control (Ex 1).

Adhesion of the composition of Examples 1 and 4 to glass and steel substrates are depicted in Fig. 2. For both the glass and steel substrates, adhesion of the butyl ionomer containing hot melt adhesive (Ex 4) was significantly improved compared to the control (Ex 1). The peak force required to achieve bond failure was about 1.8 times greater for Ex 4 than Ex 1. For both glass and steel, bond failure in Ex 1 was due to adhesive failure (the bond between the hot melt adhesive and the substrate), while bond failure in the Ex 3 was due to cohesive failure (internal bonding forces within the hot melt adhesive). An advantageous balance of properties was achieved when substantially equal amounts of ionomer and secondary polymer are used.

The novel features will become apparent to those of skill in the art upon examination of the description. It should be understood, however, that the scope of the claims should not be limited by the embodiments, but should be given the broadest interpretation consistent with the wording of the claims and the specification as a whole.

## Claims

1. A hot melt adhesive composition comprising a tackifier, a butyl rubber ionomer and a plasticizer.

2. The composition according to claim 1, which does not comprise bitumen.

3. The composition according to any of claims 1 to 2, wherein the composition further comprises a secondary polymer.

4. The composition according to any of claims 1 to 3, wherein the secondary polymer comprises non-ionomeric butyl rubber.

5. The composition according to any of claims 1 to 4, wherein the butyl rubber ionomer and the non-ionomeric butyl rubber are present in substantially equal amounts.

6. The composition according to any one of claims 1 to 5, wherein the tackifier is present in an amount of 5-50 wt%, more preferably 10-30 wt%, based on total weight of the composition.

7. The composition according to any one of claims 1 to 6, wherein the butyl rubber ionomer is present in an amount of 0.5-60 wt%, more preferably, 0.5-50 wt%, based on total weight of the composition.

8. The composition according to any one of claims 1 to 7, wherein the plasticizer is present in an amount of 5-80 wt%, more preferably 20-75 wt%, based on total weight of the composition.

9. The composition according to any one of claims 1 to 8, wherein the tackifier comprises a polymeric resin.

10. The composition according to any one of claims 1 to 9, wherein the plasticizer comprises polyisobutylene.

11. The composition according to any one of claims 1 to 10, further comprising a filler.

12. The composition according to claim 11, wherein the filler is present in an amount of 10-80 wt%, more preferably 15-50 wt%, based on total weight of the composition.

13. The composition according to any one of claims 1 to 12, wherein creep of the composition is less than creep of a corresponding composition without the butyl rubber ionomer.

14. The composition according to any one of claims 1 to 13, wherein adhesion of the composition to a substrate as measured by ASTM D3163 is at least 1.1 times greater than adhesion to the same substrate of a corresponding composition without the butyl rubber ionomer.

15. Use of a composition as defined in any one of claims 1 to 14 for bonding surfaces together.

16. The use according to claim 15, wherein the surfaces comprise glass, metal, paper, cardboard, cloth, fiber or plastic.
